# EUROPÄISCHE PATENTANMELDUNG

(11) **EP 2 182 492 A2**
(43) Veröffentlichungstag der Anmeldung: **05.05.2010**
(21) Anmeldenummer: 09009080.4
(22) Anmeldetag: 11.07.2009
(51) Int. Cl.: G07C 9/00

(54) **Verfahren zur Überprüfung der Zutrittsberechtigung**

(30) Priorität: 31.10.2008 DE 102008054112
(71) Anmelder: Carl Fuhr GmbH & Co. KG, 42579 Heiligenhaus (DE)
(72) Erfinder: Roppelt, Hans Peter, 42579 Heiligenhaus (DE); Tönges, Reiner, 42579 Heiligenhaus (DE)
(74) Vertreter: von dem Borne, Andreas

(57) **Zusammenfassung**

Es handelt sich um ein Verfahren zur Überprüfung der Zutrittsberechtigung einer Person bei einer Türschließanlage, wobei in einem Speicher für ein oder mehrere zutrittsberechtigte Personen jeweils eine vorgegebenen Anzahl sicherheitsrelevanter Merkmale eines Fingerabdrucks gespeichert werden/sind, wobei zur Prüfung der Berechtigung zumindest ein Fingerabdruck der Person aufgenommen und aus der Aufnahme sicherheitsrelevanter Merkmale extrahiert werden, wobei die aufgenommenen Merkmale mit den gespeicherten Merkmalen vergleichen und aus der Anzahl der übereinstimmenden Merkmale ein Vergleichswert (V) bestimmt wird, wobei der Zutritt gewährt wird, wenn der Vergleichswert (V) einen vorgegebenen Schwellwert (Vₘᵢₙ) erreicht oder überschreitet.

Dieses Verfahren ist **dadurch gekennzeichnet, dass** in dem Speicher für jede zutrittsberechtigte Person sicherheitsrelevante Merkmale von zumindest zwei Fingerabdrücken gespeichert werden/sind, dass zur Prüfung der Zutrittsberechtigung zumindest zwei Fingerabdrücke der Person aufgenommen und aus diesen jeweils die sicherheitsrelevanten Merkmale extrahiert werden und aus dem Vergleich zumindest zwei Vergleichswerte (V₁, V₂) bestimmt werden, wobei der Zutritt gewährt wird, wenn sowohl der erste Vergleichswert (V₁) als auch der zweite Vergleichswert (V₂) den vorgegebenen Schwellwert (Vₘᵢₙ) erreichen oder überschreiten.

## Beschreibung

Die Erfindung betrifft ein Verfahren zur Überprüfung der Zutrittsberechtigung einer Person bei einer Türschließanlage, wobei in einem Speicher für eine oder mehrere zutrittsberechtigte Personen jeweils eine vorgegebene Anzahl sicherheitsrelevanter Merkmale eines Fingerabdrucks gespeichert sind, wobei zur Prüfung der Berechtigung zumindest ein Fingerabdruck der Person aufgenommen und aus der Aufnahme sicherheitsrelevante Merkmale extrahiert werden, wobei die aufgenommenen bzw. ermittelten Merkmale mit den gespeicherten Merkmalen verglichen und aus der Anzahl der übereinstimmenden Merkmale ein Vergleichswert bestimmt wird, wobei der Zutritt gewährt wird, wenn der Vergleichswert einen vorgegebenen Schwellwert erreicht oder überschreitet. Der Vergleichswert ist vorzugsweise ein Zahlwert bzw. eine natürliche Zahl, nämlich die Anzahl der tatsächlich bei einer Prüfung ermittelten Übereinstimmungen. Auch der Schwellwert ist vorzugsweise ein Zahlwert bzw. eine natürliche Zahl, nämlich die erforderliche (minimale) Anzahl von Übereinstimmungen, bei welcher ein Zutritt gewährt wird.

Türschließanlage meint insbesondere eine sicherheitsrelevante Tür, z. B. eine Eingangstür eines Einfamilienhauses oder Mehrfamilienhauses oder auch eines gewerblich genutzten oder öffentlichen Gebäudes, z. B. einer Bank, einer Behörde oder dergleichen. Eine solche Türschließanlage weist zumindest einen Verriegelungsmechanismus zum Verriegeln und Entriegeln der Tür auf. Ergänzend oder alternativ zu den häufig vorgesehenen mechanischen Zutrittskontrollsystemen (insbesondere Schlüssel) oder auch sonstigen Zutrittskontrollsystemen mit separaten Identifizierungsmitteln (z. B. Chipkarten) werden in der Praxis zunehmend biometrische Zutrittskontrollsysteme verwendet. Bei Türschließanlagen spielt von den biometrischen Systemen insbesondere die Überprüfung des Fingerabdrucks mit einem Fingerabdrucksensor bzw. Fingerabdruckscanner eine große Rolle. In der so genannten "Anlernphase" wird der Fingerabdruck einer zutrittsberechtigten Person mit Hilfe des Sensors aufgenommen und aus dieser Aufnahme werden die sicherheitsrelevanten Merkmale, die so genannten Minutien extrahiert. Diese werden in einem Speicher der Schließanlage abgelegt und bei einem Zutrittsversuch werden wiederum die sicherheitsrelevanten Merkmale eines Fingerabdrucks bestimmt und mit den gespeicherten Merkmalen verglichen. Erreicht der Vergleichswert (d. h. die Anzahl der Übereinstimmungen) den Schwellwert oder überschreitet diesen, so wird der Zutritt gewährt, d. h. das Türschloss erhält einen entsprechenden Öffnungsbefehl. Dabei werden Fingerabdruckscanner entweder in der Ausführungsform als Zeilenscanner oder in der Ausführungsform als Flächenscanner eingesetzt. Bei einem Zeilenscanner ist die Sensorik in einem lediglich sehr schmalen Scanner in einer Breite von z. B. 2 bis 3 mm untergebracht. Zur vollen Darstellung und Auswertung einer Fingerkuppe ist es erforderlich, den relevanten Fingerkuppenbereich in einer kontinuierlichen Bewegung über diesen Sensor zu ziehen. Bei Flächenscannern ist die Sensorik in einer z. B. ca. 20 x 30 mm großen Scannerfläche untergebracht, so dass die Fingerkuppe zum Auslesen der Fingerkennlinien nicht über diese Fläche gezogen werden muss, sondern lediglich ruhend aufgelegt wird.

Unabhängig von dem verwendeten Scannertyp bzw. Scannerprinzip haben die in der Praxis zurzeit eingesetzten Zutrittskontrollsysteme mit Fingerscanner den Nachteil, dass sie bei einer akzeptablen Anwenderfreundlichkeit kein ausreichendes Maß an Sicherheit bieten und umgekehrt bei ausreichender Sicherheit nicht hinreichend anwenderfreundlich sind. Grundsätzlich lässt sich die Sicherheit erhöhen, indem der minimale Vergleichswert (d. h. der Schwellwert) ausreichend hoch angesetzt wird. Problematisch ist dann, dass in der Praxis auch bei der zutrittsberechtigten Person dieser Vergleichswert nicht immer erreicht wird, so dass einer zutrittsberechtigten Person eventuell der Zutritt verweigert wird. Dieses liegt daran, dass nicht ausreichend viele sicherheitsrelevante Merkmale erkannt werden, weil der Finger beispielsweise oberflächlich beschädigt oder verschmutzt ist oder in einer ungeeigneten Art und Weise auf den Fingerscanner aufgelegt oder über diesen gezogen wird. Setzt man zur Vermeidung dieser Probleme den Schwellwert herab, so wird zwar gewährleistet, dass eine berechtigte Person zuverlässig erkannt wird, es steigt jedoch das Risiko, dass einer nicht zutrittsberechtigten Person der Zutritt gewährt wird, da "zufällig" eine "geringe" Übereinstimmung sicherheitsrelevanter Merkmale vorliegt.

Die Zuverlässigkeit eines derartigen Systems wird in der Praxis durch die so genannte Falschakzeptanzrate (FAR) angegeben, d. h. durch die Zulassungsrate Unberechtigter. Eine Falschakzeptanzrate von 1:10.000 (d. h. 10⁻⁴) bedeutet, dass statistisch betrachtet von 10.000 unberechtigten Fingern einer als berechtigt interpretiert wird. Es ist bei den in der Praxis eingesetzten Zutrittskontrollsystemen für z. B. Einfamilienhäuser heute möglich, in ausreichend anwenderfreundlicher Weise eine solche Falschakzeptanzrate von 1:10.000 zu erreichen. Diese entspricht in etwa einem vierstelligen Zahlencode. Erhöht man den Schwellwert, so dass eine geringere Falschakzeptanzrate von z. B. 1:1.000.000 (d. h. 10⁻⁶) erreicht wird, so entspricht dies in etwa einem siebenstelligen Zahlencode. Damit wird die Sicherheit zwar deutlich erhöht, in der Praxis ist diese jedoch mit ausreichender Anwenderfreundlichkeit nicht realisierbar, zumal nicht gewährleistet ist, dass die Fingerkuppen der Benutzer überhaupt über eine ausreichende Anzahl biometrischer Merkmale verfügen. Es besteht die Gefahr, dass ein Finger beim Anlernvorgang nicht akzeptiert wird oder aber bei einer späteren Benutzung sehr häufig als fehlerhaft abgewiesen wird. Dieses mag für Spezialanwendungen in z. B. Hochsicherheitsbereichen akzeptiert werden. In der Praxis von Einfamilienhäusern, Mehrfamilienhäusern oder auch Bürogebäuden, Behörden oder dergleichen ist dieses nicht akzeptabel. - Hier setzt die Erfindung ein.

Der Erfindung liegt die Aufgabe zugrunde, ein Verfahren zur Überprüfung der Zutrittsberechtigung einer Person bei einer Türschließanlage zu schaffen, welches sich bei hoher Anwenderfreundlichkeit zugleich durch ein hohes Maß an Sicherheit auszeichnet. Insbesondere soll eine besonders geringe Falschakzeptanzrate erreicht werden, ohne dass die Gefahr besteht, dass tatsächlich berechtigten Personen der Zutritt verweigert wird.

Zur Lösung dieser Aufgabe lehrt die Erfindung bei einem gattungsgemäßen Verfahren zur Überprüfung der Zutrittsberechtigung einer Person bei einer Türschließanlage, dass in den Speicher für jede zutrittsberechtigte Person sicherheitsrelevante Merkmale von zumindest zwei Fingerabdrücken gespeichert werden/sind, dass zur Prüfung der Zutrittsberechtigung zumindest zwei Finger der Person aufgenommen und jeweils die sicherheitsrelevanten Merkmale extrahiert werden und aus dem Vergleich zumindest zwei Vergleichswerte bestimmt werden, wobei der Zutritt gewährt wird, wenn sowohl der erste Vergleichswert als auch der zweite Vergleichswert den vorgegebenen Schwellwert erreichen oder überschreiten. Auf diese Weise wird ein hohes Maß an Sicherheit erreicht, ohne dass die Gefahr besteht, dass eine tatsächlich berechtigte Person abgewiesen wird.

Die Erfindung geht dabei von der Erkenntnis aus, dass der Schwellwert für den Vergleich der übereinstimmenden Merkmale für einen Fingerdruck verhältnismäßig gering angesetzt werden kann, wenn nicht lediglich ein einziger Fingerabdruck, sondern zumindest zwei Fingerabdrücke überprüft werden. Dadurch, dass zunächst einmal ein niedriger Schwellwert verwendet wird, wird im Rahmen der Erfindung eine hohe Anwenderfreundlichkeit realisiert, da es unwahrscheinlich ist, dass die zuvor gespeicherten Fingerabdrücke bzw. Merkmale nicht richtig erkannt werden. Die Sicherheit wird nun dadurch erhöht, dass nicht lediglich eine einzige Übereinstimmung eines Fingerabdruckes gefordert wird, sondern dass die Übereinstimmung von zwei Fingerabdrücken gefordert wird. Wird beispielsweise durch entsprechende Wahl des Schwellwertes eine Falschakzeptanzrate eines Fingerabdruckes von 1:10.000 = 10⁻⁴ realisiert und werden dabei zwei Fingerabdrücke geprüft, so ergibt sich eine kombinierte Falschakzeptanzrate von 10⁻⁴ x 10⁻⁴ = 10⁻⁸. Dieses entspricht einer Falschakzeptanzrate die bei der Überprüfung lediglich eines Fingerabdruckes nicht oder jedenfalls nicht mit realisierbarer Anwenderfreundlichkeit erreichbar wäre.

Dazu schlägt die Erfindung vor, dass der Schwellwert größer oder gleich 5 ist, vorzugsweise größer oder gleich 7. Dadurch wird ein ausreichendes Maß an Sicherheit gewährleistet. Von besonderer Bedeutung ist nun jedoch, dass die Erfindung außerdem vorschlägt, dass der Schwellwert einen bestimmten Wert nicht überschreitet, um eine ausreichende Anwenderfreundlichkeit zu gewährleisten. Der Schwellwert wird vorzugsweise kleiner oder gleich 15, besonders bevorzugt kleiner oder gleich 10 gewählt. Nach einem weiteren Vorschlag schlägt die Erfindung vor, dass der Schwellwert mit der Maßgabe ausgewählt wird, dass die Falschakzeptanzrate für jeden der Fingerabdrücke kleiner oder gleich 1:1.000 und/oder größer oder gleich 1:100.000.

Grundsätzlich besteht die Möglichkeit, drei oder noch mehr Fingerabdrücke zur Identifizierung bzw. Berechtigungsüberprüfung zu scannen. Besonders bevorzugt werden jedoch (lediglich) zwei Fingerabdrücke registriert. Dieses gewährleistet ein ausreichendes Maß an Sicherheit bei gleichzeitig hohem Bedienkomfort, denn zwei Finger, z. B. Zeigefinger und Mittelfinger, lassen sich sehr einfach direkt nebeneinander auf z. B. einen Fingerscanner mit zwei nebeneinander angeordneten Scanfeldern legen.

Denn die Erfindung schlägt nach besonders bevorzugter Ausgestaltung vor, dass die Fingerabdrücke, z. B. die beiden Fingerabdrücke zeitgleich registriert werden, z. B. mit zwei Fingerabdruckscannern bzw. einem Fingerabdruckscanner mit zwei Scanfeldern. Die Erfindung umfasst jedoch auch Ausführungsformen, bei welchen die Fingerabdrücke, z. B. die beiden Fingerabdrücke zeitversetzt bzw. nacheinander registriert werden, z. B. mit einem einzigen Fingerabdruckscanner, welcher lediglich ein Scanfeld für einen Finger aufweist. Eine solche Ausgestaltung hat grundsätzlich den Vorteil, dass mit herkömmlichen Fingerabdruckscannern gearbeitet werden kann, die in ihrer Betriebsweise an das erfindungsgemäße Verfahren angepasst werden.

Grundsätzlich besteht die Möglichkeit, dass der Schwellwert für die einzelnen Vergleiche verschiedener Finger unterschiedlich hoch angesetzt wird. Bevorzugt wird jedoch mit einem einheitlichen Schwellwert für beide Vergleiche bzw. sämtliche Vergleiche gearbeitet.

Gegenstand der Erfindung ist auch eine Schließanlage für Türen oder dergleichen mit zumindest einer Zutrittskontrollvorrichtung für die Überprüfung der Zutrittsberechtigung mit Hilfe des beschriebenen Verfahrens. Eine solche Schließanlage weist zumindest einen Verriegelungsmechanismus zum Verriegeln und Entriegeln bzw. Schließen und Öffnen der Tür auf. Die Zutrittskontrollvorrichtung dieser Schließanlage weist zumindest einen Speicher sowie zumindest einen Fingerabdruckscanner auf. In dem Speicher werden - nach dem jeweiligen Anlernvorgang - die sicherheitsrelevanten (biometrischen) Merkmale der Fingerabdrücke gespeichert.

Die Erfindung umfasst dabei grundsätzlich auch solche Schließanlagen, bei denen lediglich ein einziger Fingerabdruckscanner mit einem einzigen Scanfeld vorgesehen ist, so dass die einzelnen Fingerabdrücke zeitversetzt bzw. nacheinander registriert werden. Bevorzugt werden jedoch zwei Fingerabdruckscanner (mit jeweils einem einzigen Scanfeld) oder ein Fingerabdruckscanner mit zumindest zwei Scanfeldern eingesetzt, so dass zumindest zwei Fingerabdrücke zeitgleich aufgenommen werden können. Besonders bevorzugt wird dabei ein Fingerabdruckscanner mit zwei unmittelbar nebeneinander angeordneten Scanfeldern verwendet. Ein solcher z. B. schalenförmiger Fingerabdruckscanner hat unmittelbar nebeneinander zwei entweder graphisch markierte oder vorzugsweise durch entsprechende Formgebung markierte Scanfelder, die beispielsweise durch bogenförmige Begrenzungsflächen begrenzt sein können, wobei die unmittelbar nebeneinander angeordneten Scanfelder z. B. lediglich durch einen Trennsteg voneinander getrennt sind, so dass der Nutzer einfach erkennen kann, dass zwei Finger gescannt wurden. Es ergibt sich folglich aus der Konstruktion, wie der Scanner zu benutzen ist. Der bzw. die Scanner können in an sich bekannter Weise entweder als Zeilenscanner oder auch als Flächenscanner ausgebildet sein.

Im Folgenden wird die Erfindung anhand einer lediglich ein Ausführungsbeispiel darstellenden Zeichnung näher erläutert. Es zeigen
- Fig. 1: einen herkömmlichen Fingerabdruckscanner für eine Schließanlage einer Tür in einer perspektivischen Darstellung,
- Fig. 2: eine Draufsicht auf eine abgewandelte Ausführungsform des Gegen- standes nach Fig. 1,
- Fig. 3: den Gegenstand nach Fig. 2 im Zuge der Benutzung und
- Fig. 4: eine abgewandelte Ausführungsform des Gegenstandes nach Fig. 2.

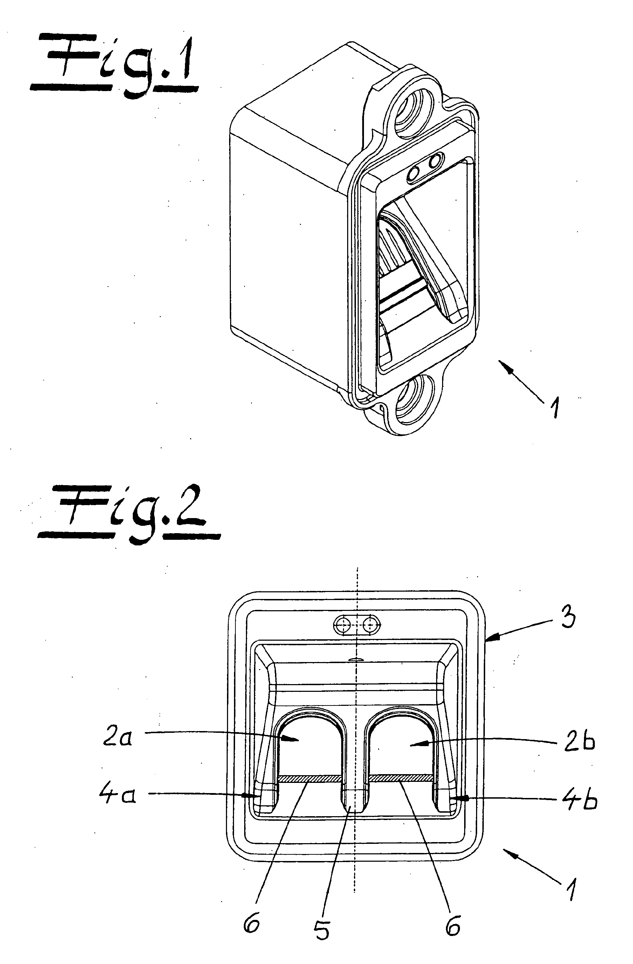

In den Figuren ist jeweils ein Fingerabdruckscanner 1 dargestellt, welcher Bestandteil einer Zutrittskontrollvorrichtung für eine Schließanlage einer Tür und für das erfindungsgemäße Verfahren bestimmt ist. Fig. 1 zeigt eine erste, grundsätzlich bekannte Ausführungsform eines "einfachen" Fingerabdruckscanners. In den Ausführungsbeispielen gemäß Fig. 2 bis 4 ist der Fingerabdruckscanner als "Doppelscanner" mit zwei unmittelbar nebeneinander angeordneten Scanfeldern 2a, 2b ausgebildet. Dieses ermöglicht es, zeitgleich zwei Fingerabdrücke von zwei Fingern einer Hand aufzunehmen.

Der Fingerabdruckscanner 1 weist eine Gehäuseschale 3 auf, in welche zwei Scanfelder 2a, 2b integriert sind. Im Ausführungsbeispiel sind diese Scanfelder durch die Formgebung der Schale markiert. Die beiden Scanfelder 2a, 2b werden jeweils durch eine rahmenartige, einseitig offene Umrandung 4a, 4b gebildet. Dabei werden die beiden Scanfelder 2a, 2b durch einen zwischen den Scanfeldern angeordneten Trennsteg 5 voneinander getrennt bzw. beabstandet.

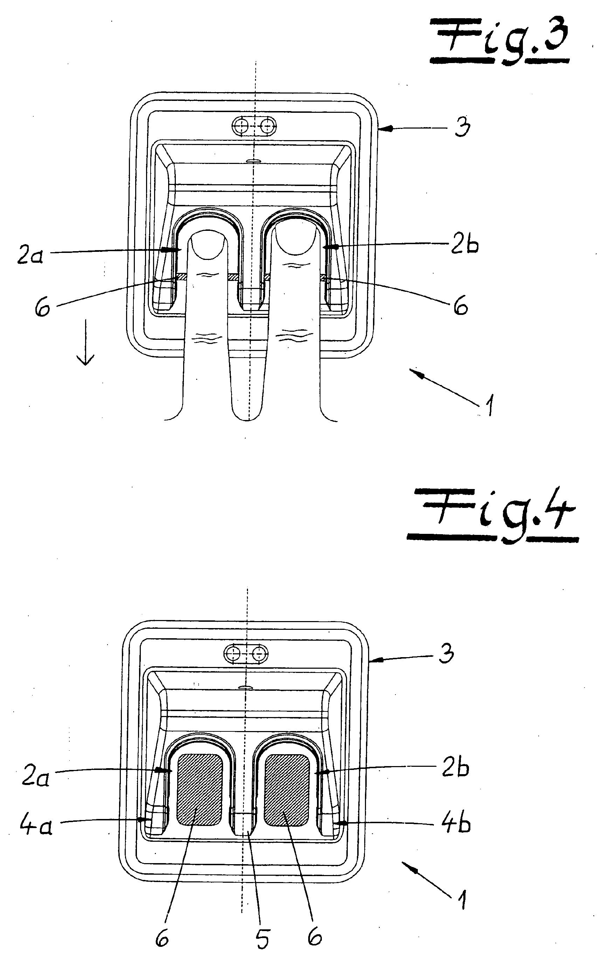

Fig. 2 zeigt dabei eine Ausführungsform der Erfindung, bei welcher der Fingerabdruckscanner als Zeilenscanner mit zwei schmalen Sensorstreifen 6 ausgebildet ist. Bei dieser Ausführungsform werden die beiden Finger über die beiden Sensorfelder gezogen (vgl. Fig. 3).

Demgegenüber zeigt Fig. 4 eine abgewandelte Ausführungsform der Erfindung, bei welcher der Fingerabdruckscanner als Flächenscanner mit zwei größeren Sensorfeldern ausgestaltet ist. Bei dieser Ausführungsform werden die Finger auf die Scanfelder aufgelegt und "ruhend" zeitgleich registriert.

Im Rahmen der Erfindung kommt es dabei darauf an, dass zur Überprüfung der Zutrittsberechtigung nicht lediglich ein einziger Fingerabdruck einer Person ausgewertet wird, sondern dass (zeitversetzt oder zeitgleich) zumindest zwei Fingerabdrücke aufgenommen und ausgewertet werden. Im Ausführungsbeispiel können das zwei (z. B. unmittelbar nebeneinander angeordnete) Finger einer Hand der Person sein. In Fig. 3 ist dabei angedeutet, dass es sich beispielsweise um den Zeigefinger und den Mittelfinger einer Hand handeln kann. Die Erfindung lässt sich jedoch auch realisieren, wenn jeweils ein Finger einer Hand eines Benutzers, z. B. die beiden Zeigefinger verwendet werden.

Jedenfalls kann im Rahmen der Erfindung so vorgegangen werden, dass jeder einzelne Finger unter Berücksichtigung eines verhältnismäßig niedrigen Vergleichswertes bzw. Schwellwertes identifiziert wird, so dass in anwenderfreundlicher Weise stets gewährleistet ist, dass einer berechtigten Person, auch der Zutritt gewährt wird. Dennoch zeichnet sich die Erfindung durch ein hohes Maß an Sicherheit aus, da der Zutritt nur bei Übereinstimmung hinsichtlich beider Fingerabdrücke gewährt wird. Auf diese Weise kann für jeden Finger eine verhältnismäßig hohe Falschakzeptanzrate FAR von z. B. 10⁻⁴ in Kauf genommen werden. Dennoch ergibt sich dann durch die doppelte Auswertung von zumindest zwei Fingern insgesamt eine sehr niedrige Falschakzeptanzrate von lediglich 10⁻⁸

## Patentansprüche

1. Verfahren zur Überprüfung der Zutrittsberechtigung einer Person bei einer Türschließanlage,
wobei in einem Speicher für ein oder mehrere zutrittsberechtigte Personen jeweils eine vorgegebene Anzahl sicherheitsrelevanter Merkmale zumindest eines Fingerabdrucks gespeichert werden/sind,
wobei zur Prüfung der Berechtigung zumindest ein Fingerabdruck der Person aufgenommen und aus der Aufnahme sicherheitsrelevanter Merkmale extrahiert werden,
wobei die aufgenommenen Merkmale mit den gespeicherten Merkmalen verglichen werden und aus der Anzahl der übereinstimmenden Merkmale ein Vergleichswert (V) bestimmt wird,
wobei der Zutritt gewährt wird, wenn der Vergleichswert (V) einen vorgegebenen Schwellwert (Vₘᵢₙ) erreicht oder überschreitet,
**dadurch gekennzeichnet,**
**dass** in dem Speicher für jede zutrittsberechtigte Person sicherheitsrelevante Merkmale von zumindest zwei Fingerabdrücken gespeichert werden/sind,
**dass** zur Prüfung der Zutrittsberechtigung zumindest zwei Fingerabdrücke der Person aufgenommen und aus diesen jeweils die sicherheitsrelevanten Merkmale extrahiert werden und aus dem Vergleich zumindest zwei Vergleichswerte (V₁, V₂) bestimmt werden,
wobei der Zutritt gewährt wird, wenn sowohl der erste Vergleichswert (V₁) als auch der zweite Vergleichswert (V₂) den vorgegebenen Schwellwert (Vₘᵢₙ) erreichen oder überschreiten.

2. Verfahren nach Anspruch 1, **dadurch gekennzeichnet, dass** der Schwellwert (Vₘᵢₙ) größer oder gleich 5 ist.

3. Verfahren nach Anspruch 2, **dadurch gekennzeichnet, dass** der Schwellwert größer oder gleich 7 ist.

4. Verfahren nach einem der Ansprüche 1 bis 3, **dadurch gekennzeichnet, dass** der Schwellwert (Vₘᵢₙ) kleiner oder gleich 15 ist.

5. Verfahren nach Anspruch 4, **dadurch gekennzeichnet, dass** der Schwellwert (Vₘᵢₙ) kleiner oder gleich 10 ist.

6. Verfahren nach einem der Ansprüche 1 bis 5, **dadurch gekennzeichnet, dass** der Schwellwert (Vₘᵢₙ) mit der Maßgabe ausgewählt wird, dass die Falschakzeptanzrate (FAR) für jeden der Fingerabdrücke kleiner oder gleich 1:1.000 ist.

7. Verfahren nach einem der Ansprüche 1 bis 6, **dadurch gekennzeichnet, dass** der Schwellwert (Vₘᵢₙ) mit der Maßgabe ausgewählt wird, dass die Falschakzeptanzrate (FAR) für jeden der Fingerabdrücke größer oder gleich 1:100.000 ist.

8. Verfahren nach einem der Ansprüche 1 bis 7, **dadurch gekennzeichnet, dass** die zumindest zwei Fingerabdrücke zeitgleich, z. B. mit zwei Fingerabdruckscannern bzw. zwei Scanfeldern eines Fingerabdruckscanners, gemessen werden.

9. Verfahren nach einem der Ansprüche 1 bis 7, **dadurch gekennzeichnet, dass** die zumindest zwei Fingerabdrücke zeitversetzt, z. B. mit einem einzigen Fingerabdruckscanner bzw. einem einzigen Scanfeld eines Fingerabdruckscanners, gemessen werden.

10. Schließanlage für Türen oder dergleichen mit zumindest einer Zutrittskontrollvorrichtung für die Überprüfung der Zutrittsberechtigung nach einem Verfahren nach einem der Ansprüche 1 bis 9,
wobei die Zutrittskontrollvorrichtung zumindest einen Speicher und zumindest einen Fingerabdruckscanner (1) aufweist.

11. Schließanlage nach Anspruch 10, mit zumindest zwei Fingerabdruckscannern oder mit einem Fingerabdruckscanner mit zumindest zwei Scanfeldern (2a, 2b) für die gleichzeitige Aufnahme von zumindest zwei Fingerabdrücken.

12. Schließanlage nach Anspruch 11, **dadurch gekennzeichnet, dass** der Fingerabdruckscanner (1) zumindest zwei (unmittelbar) nebeneinander angeordnete Scanfelder (2a, 2b) aufweist.

13. Schließanlage nach einem der Ansprüche 10 bis 12, **dadurch gekennzeichnet, dass** der Fingerabdruckscanner (1) als Zeilenscanner ausgebildet ist.

14. Schließanlage nach einem der Ansprüche 1 bis 12, **dadurch gekennzeichnet, dass** der Fingerabdruckscanner (1) als Flächenscanner ausgebildet ist.
